# EUROPEAN PATENT APPLICATION

(11) **EP 4 275 475 A1**
(43) Date of publication of application: **15.11.2023**
(21) Application number: 21917368.9
(22) Date of filing: 11.01.2021
(51) Int. Cl.: A01D 51/00

(54) **SUCTION-BASED FRUIT-COLLECTING MACHINE FOR CARRYING ON THE BACK**

(71) Applicant: Galán Calvo, Juan, 28037 Madrid (ES); Bermúdez de Castro de la Fuente José Luis, 28014 Madrid (ES)
(72) Inventor: Galán Calvo, Juan, 28037 Madrid (ES); Bermúdez de Castro de la Fuente José Luis, 28014 Madrid (ES)
(74) Representative: TRBL Intellectual Property
(86) International application number: PCT/ES2021/070007
(87) International publication number: WO 2022/148889

(57) **Abstract**

The invention relates to a fruit harvester machine by suction to carry on the back and suitable for walking on all types of field and situations. It has a suction mechanism (2) that exerts its suction force on a first repository (3) to which it is connected. Said suction force is transmitted to a main conduit (7), which pours the products and other materials aspired into the first repository, without passing through the turbine (2). The first repository (3) includes a discharge system (4) that empties the content into a second repository (5), performing a screening process that keeps the desired fruits inside and expels stones and/or other unwanted objects outside. In addition to being a vacuum cleaner, the machine can become a blower, by incorporating elements that change the direction of the air flows in such a way that the main conduit (7) blows instead of vacuuming.

## Description

### Field of the Invention

The present invention belongs to the field of devices and machines intended to mechanize agricultural harvesting, and more specifically to that relating to portable machines that are used to harvest olives and nuts, applicable on all types of field.

### Technical Background

The collection of fruits from the ground has usually been done manually, with a very high effort from the worker, and a very low efficiency. In order to increase efficiency, solutions consisting of coupling large devices to tractors or self-propelled machines have been developed, which is a good solution for large farms where the field is eminently flat but it is not a valid solution even for small or medium-sized farms, neither for difficult orographies, nor when the separation between trees is not enough for large vehicles to circulate.

Furthermore, even on large and efficient farms where large machines are used, there is always a small but significant percentage of fruit that cannot be picked up by the machines or that falls out of the ground sheets. Normally these fruits are usually left uncollected, as they could only be used in a traditional, labour-intensive way.

As of example, what is disclosed in document ES1077320U is known, which describes a wheelbarrow-trailer that can be coupled to a towing vehicle; document ES2399174 which discloses an olive harvesting machine that is included in the structure of a truck-type vehicle; document ES2142728 where a self-propelled machine is disclosed that has a plurality of brushes for harvesting olives or similar products; or the documents ES1064460U and ES2199038 which describe vacuum machines that are coupled to a tractor or truck, from which they take power, and that are used to collect olives and the like. As mentioned earlier, very high efficiency is achieved with this type of solution, but its use is limited to large farms, flat field and/or sufficient separation between trees.

From these solutions, smaller size devices have been developed that are pulled like a wheelbarrow, but they present the problem that they are very impractical for use in difficult field and are not very powerful for medium-large farms. By way of example, what is disclosed in document ES1061650U is known, which describes a collection mechanism that can be attached to a pull structure; document ES1054187U which describes a small self-propelled machine that rolls on the ground; or the documents ES1020417U and ES2004609 where different types of manually pulled vacuum carts are described. As it has been anticipated, with this type of solution it is possible to work in farms of medium and small dimensions, but its performance and practicality is very low. These solutions also present the problem that they are not autonomous machines and therefore have a limited radius of action.

Manual harvesters are also known, which are only used for very small farms and with flat land, which require prior work of compacting the land for proper performance and use. Examples of these typologies is what is disclosed in documents ES323098 and ES368129. These solutions have the advantage that they do not require pneumatic mechanisms, but they are obsolete solutions that only work for flat and compact field.

There are certain farmers who use autonomous equipment such as blowers that allow the fruit to be grouped for later collection. In combination with these methodologies, machines that collect this type of stock are known, for example, the machine disclosed in document ES2156054, but this machine requires being coupled to a tractor vehicle and therefore is not suitable for all types of field.

Taking into account the problem of being able to use a portable solution that can be used in any field, solutions have emerged that can be considered the closest to the state of the art. Among others, solutions based on suction devices for small products that include a repository in their structure are known, although they have the disadvantage that they are heavy and preferably require transport with a wheelbarrow. They also have the disadvantage that they do not screen the product sufficiently. What is disclosed in document ES2140260 stands out, which is based on the use of suction hoses that can be easily manipulated by the user, but has the disadvantage of requiring a very powerful, large compressor. It is known what is disclosed in the document ES1035248U where a small device is described that includes a suction tube and a collection chamber, but this device does not screen the product from stones and other heavy elements, it lacks power and the repository It is so small that efficiency are very low, so it is not recommended for continuous collection tasks, as this solution is intended for punctual collection of small-sized products. Finally, what is disclosed in the document EP0862847 is known, which solves the problem of screening compared to the previous document, but has a heavy structure that makes it not recommendable for the user to carry it for a long time, so it preferably requires being transported in a small trolley, which, in certain types of field, makes work difficult, reduces performance or simply the orography does not allow it.

Faced with all these known solutions, mainly those that are considered closest to the state of the art and taking into account the existing technical problems in this industrial field that have not been resolved to date, the invention defined below is presented, which is uniquely suitable for any type of field, harvesting technique and farm size.

### Description of the Invention

The present invention refers to a harvesting machine for individual use, comprising:
- suitable securing means for securing the machine on the back of a user,
- at least one main conduit,
- at least one suction means, configured to exert a suction force on the at least one main conduit,
- a first repository, located between the main conduit and the inlet of the at least one suction means, the first repository being suitable for receiving products and materials aspired through the main conduit due to the suction force of the at least one suction means,
- a discharge system located in connection with the first repository, configured to block or allow the output of content from the first repository, and
- a second repository, independent of the first repository, connected to the discharge system, configured to receive the content of the first repository each time the discharge system allows the content of the first repository to exit.

This single-use and portable machine is suitable for vacuum harvesting of agricultural products (such as olives, nuts and the like). A user can carry it on his back as a backpack by means of fastening means, for example straps attached to a frame, and can move on foot over any type of field, without the need for wheels or mechanical or animal traction.

The operation of the machine is such that the suction current produced by the at least one suction means, such as a turbine with a motor configured to drive said turbine, is transmitted to a first repository, which is connected to at least a main conduit that sucks from the ground or where the products and materials aspired are located to be received in the first repository. These aspirated products and materials are made up of desired fruits (the fruits to be collected) and other unwanted materials (stones and/or other objects other than the desired fruits, and also leaves and/or other light materials).

The first repository has a discharge system, for example a hatch at the bottom, which empties its content into a second repository, so it does not need to have a large capacity. The discharge system keeps the communication between the first repository and the second repository closed when the machine is vacuuming. In this way the suction force is transmitted to the main conduit.

The main advantages of a machine with these characteristics are:
- The products and materials aspirated are received in the first repository without the need to go through at least one means of aspiration, and therefore without being exposed to the damage they could suffer if they had to go through it.
- The harvesting task can be carried out in a comfortable and fast way, being able to collect the fruits directly on foot, and achieve a high efficiency, with a great versatility of uses and applications.

In particular embodiments, the second repository is made of a framework, mesh, or perforated material that has holes of a shape, number, and caliber specially designed to keep desired fruits inside, and screen unwanted materials so that they fall out by themselves., being able in some cases to be the second repository of interchangeable type and eligible according to the different desired fruits.

The different interchangeable and eligible types of second repository can be made of different materials or shapes, and with different types of holes.

Thanks to the screening of unwanted materials, such as stones or other smaller objects, the second repository can store a more efficient load of desired fruits (free from unnecessarily carrying a load that could even be heavier than that of the desired fruits). This weight saving compared to other existing machines could mean that a user can carry the machine on his shoulders for longer, and/or have to unload the content of the second repository less times.

In addition to the suction function for fruit harvesting, particular versions of this machine also include the blowing function, by incorporating elements in such a way that the main conduit blows instead of vacuuming. This blowing function is a feature of great industrial utility in the harvesting of crops, as it facilitates the grouping of the fruits for later collection, or the winnowing of leaves and/or other light materials. In this way, the machine can have different alternative solutions described below, which would allow an operator to alternate quickly and easily between suction and blowing, according to their needs.

In particular embodiments, the harvesting machine additionally comprises a recirculation mode that reverses a direction of rotation of the at least one suction means, so that it allows at least one main conduit to expel air instead of vacuuming it in.

Thanks to this recirculation system, the air flow is allowed to reverse its direction of transit inside the machine, so that the at least one main conduit can expel air instead of vacuuming it in.

In particular embodiments, the machine additionally comprises an alternative recirculation system comprising:
- a first flow collection conduit located at the outlet of the at least one means of suction
- a second conduit that communicates with the outside
- a third conduit
- a fourth conduit that communicates with the first repository
- a first diverting valve, located at the end of the first flow collection conduit, configured to selectively communicate the first flow collection conduit with the second conduit that is directed to the outside, or with the third conduit
- a second diverting valve located at a point between the at least one main conduit and the first reservoir, which also receives the arrival of the third conduit and which is configured to be arranged in a first position in which the at least one main conduit communicates with the fourth conduit connected to the first reservoir, closing at the same time the third conduit, or else in a second position in which the third conduit communicates with the at least one main conduit, while closing the fourth conduit.

Thanks to this alternative recirculation system, the flow of air coming out of the at least one means of aspiration is allowed to reverse its direction of transit within some elements of the machine, so that the at least one main conduit can expel air in instead of vacuuming it.

The machine could become a vacuum or a blower depending on the position of the diverting valves. The operation of the machine in suction mode would occur when the first diverter valve is communicating the first flow collection conduit with the second conduit that goes to the outside, while the second diverter valve is in the previously called first position, communicating the at least one main conduit with the fourth conduit that goes to the first repository. In this way, the suction force of the at least one suction means would be transmitted to the first reservoir, which in turn is transmitted to the fourth conduit, which in turn is transmitted to the at least one main conduit. On the other hand, the exhaust air flow of the at least one suction means would be expelled through the second conduit to the outside.

The operation of the machine in blowing mode would occur when the first diverter valve is communicating the first flow collection conduit with the third conduit that goes to the second diverter valve, while the second diverter valve is in the previously called second position, the third conduit communicating with the at least one main conduit. In this way, the outlet air flow of the at least one means of aspiration would be directed towards the third conduit by the first diverting valve, and in turn the second diverting valve would direct it to be expelled through the main conduit like a blower. On the other hand, the discharge system of the first repository would remain open, becoming the air inlet door for the at least one means of aspiration.

In particular embodiments, the machine additionally comprises an alternative recirculation system that comprises a 4-way recirculation valve, which is connected to:
A. the at least one main conduit
B. the first repository
C. an additional exhaust or suction conduit
D. the outlet of the at least one suction means

The 4-way recirculation valve would be configured to be arranged in a first suction position in which it connects the at least one main conduit with the first repository, and the additional exhaust conduit with the outlet of the at least one suction medium. In a second blowing position, it would connect the at least one main conduit with the outlet of the at least one suction means, and the first reservoir with the additional suction conduit.

Thanks to this alternative recirculation system, the flow of air coming out of the at least one means of aspiration is allowed to reverse its direction of transit within some elements of the machine, so that the at least one main conduit can expel air in instead of vacuuming it.

That is, with this alternative recirculation system, the machine could become a vacuum cleaner or a blower depending on the position of the 4-way valve. In the suction mode, the force that would be produced by the at least one suction means in the first reservoir would be transmitted to the at least one main conduit that would suck. In blown mode, the exhaust flow that would leave the at least one suction means would be transmitted to the at least one main conduit that would blow.

As a summary of the 8 previous paragraphs, particular versions of the machine would have a recirculation system that would turn the machine into a blower as well as a vacuum cleaner, through at least three different versions:
1. By reversing the rotation of the at least one suction means
2. Through a system of two diverting valves inserted between additional conduits
3. Via a 4-way recirculation valve located at a point between the main conduit and the first repository

In particular embodiments, the machine additionally comprises means for configuring a double operating mode, manual or automatic, of the discharge system and/or any of the valves of the machine. In this way, in the event of a failure in the automatisms, it could continue working in manual mode.

In particular embodiments, the machine additionally comprises a mechanism configured to automatically control the discharge system of the first repository, which comprises at least one sensor and at least one actuator configured to discharge the first repository based on the information received from the at least a sensor.

Thanks to this mechanism, the repository could be downloaded without the need for the user to do it manually, thus simplifying the collection task. By way of example, it could open automatically when the user stops activating the at least one suction device, and close automatically when he activates it again.

In particular embodiments, the machine additionally comprises a set of interchangeable nozzles, suitable to be coupled at one end of the at least one main conduit, the nozzles being suitable for adapting the use of the machine to different conditions and desired fruits.

In particular embodiments, the machine additionally comprises an additional screening system located after the first repository, such as a perforated ramp, which sieves the content that comes out of this first repository before entering the second repository, expelling unwanted materials that are discarded. The design and size of the screening system would be optimized to keep the desired fruits inside, being, completely or in parts thereof, interchangeable and selectable according to the different desired fruits.

In particular embodiments, the second repository, in addition to comprising a collection opening for the content coming from the first rep|ository, additionally includes an outlet opening for emptying and final discharge of its content, being suitable for a quick and simple discharge of the products, so that mode that allows the harvesting task to be carried out in a more comfortable, fast and efficient way.

Since the main suction conduit is the element of the machine that approaches the ground or where the desired fruits are located, in particular embodiments, the at least one main conduit can be flexible at least in some part and additionally comprise drive controls in adjustable ergonomic supports, such as elbow and forearm supports, or control handles for each hand that allow controlling the operation of the machine and the power of at least one means of suction.

In particular embodiments, the machine additionally comprises a expel mechanism, such as a fan, located in an open space between the first repository and the second repository, in order to clean the contents out of the first repository of leaves and other light materials before it enters the second repository.

In particular embodiments, the machine additionally comprises an alternative fanning system that incorporates a fanning nozzle and an escape nozzle, arranged to collect the air that the at least one suction means expels, so that the fanning nozzle is arranged to directing the air flow to an open space between the first repository and the second repository, and the escape nozzle is arranged to direct the air flow to the outside. Both nozzles can be adjustable, and their purpose is to fan or clean leaves and other light materials from the content that comes out of the first repository before it enters the second repository. The combined regulation of both nozzles makes it possible to distribute the flow rate of the exhaust flow of at least one means of aspiration at will between the one that is used to fan and the one that is expelled to the outside without any use.

In particular embodiments, the harvesting machine additionally comprises a timer system that allows the expel mechanism or the at least one suction means to continue working automatically for a time after the discharge system of the first repository has been opened.

In any of the embodiments that include a winnowing, either by means of the air expelled by the at least one suction means or by the expel mechanism, even if the opening of the discharge system of the first repository meant that the suction force was no longer applied transmits at least one main conduit with sufficient force, and therefore does not aspire, the fact that the suction means or the fan mechanism continues to work has the purpose of using its exhaust air flow to fan.

In particular embodiments, the machine additionally comprises a protection filter located between the first repository and the at least one means of suction, which incorporates a cleaning mechanism comprising a freely rotating propeller, which includes blades with flexible filaments on its contact edge with the protection filter, so that the protection filter is cleaned by turning the propeller carried by the flow of the at least one suction medium. The protection filter can be removable and prevents some materials from being introduced into the at least one suction mean.

In particular embodiments, for quick and easy maintenance of the machine, it additionally comprises an internal water cleaning system by incorporating quick connectors for hoses in various elements of the machine, such as the at least one suction means, the first repository or any of the conduits through which the air flows that carry dust and particles run.

In particular embodiments, the machine includes an alternative variant of the first repository that allows the discharge of the aspired materials not to interrupt their continuous suction, in which:
- The first repository is in the shape of a solid of revolution, such as a cylinder, and incorporates a radial-blade rotor inside, with three or more blades without gaps or openings, joined on an axis on which they rotate, so that, when turning, it divides the interior of the first repository into watertight compartments. These blades may have some flexible part, in order to avoid jams. Inside, the repository may have projections that improve the sealing of the compartments.
- The first repository comprises openings that connect with the at least one suction means and with the at least one main conduit and are located so that they coincide in the same sealed compartment as those formed by the bladed rotor.
- The discharge system is at least one discharge opening located preferably in the lower part of the first repository, and sufficiently separated from the other openings that connect with the at least one suction means and with the at least one main conduit, in such a way that it is always in a different watertight compartment.

The products and materials aspirated are deposited in the sealed compartment that at that moment is facing the opening that communicates with the main conduit. As the rotor rotates, this watertight compartment is no longer connected to the main conduit, later reaching the discharge opening through which it empties its contents due to the effect of gravity and the sweep of the rotor blades. Finally, the compartment continues its journey empty, to finish completing a cycle and reach the filled position again. The speed of the radial blade rotor is adjustable, and its movement can be:
1. Continuous. In this case, the watertight compartments pass without stopping through the different areas of the repository where the openings are located. For a few moments, the opening that goes to the main conduit is in communication with two different sealed compartments, but since none of these are in direct communication with the discharge opening, there is no loss of the machine's suction capacity.
2. Discontinuous. The rotor rotates in pulses, stopping at the specific positions in which the compartments face the openings, so that in each pulse the sealed compartments advance to the next position.
3. A combination of the above, in order to adapt to different conditions.

### Description of the Drawings

To complement the description that is being made and in order to help a better understanding of the characteristics of the invention, according to a preferred example of its practical embodiment, and a variant of the first repository, a set of figures and drawings where, with an illustrative and non-limiting nature, the following is represented:

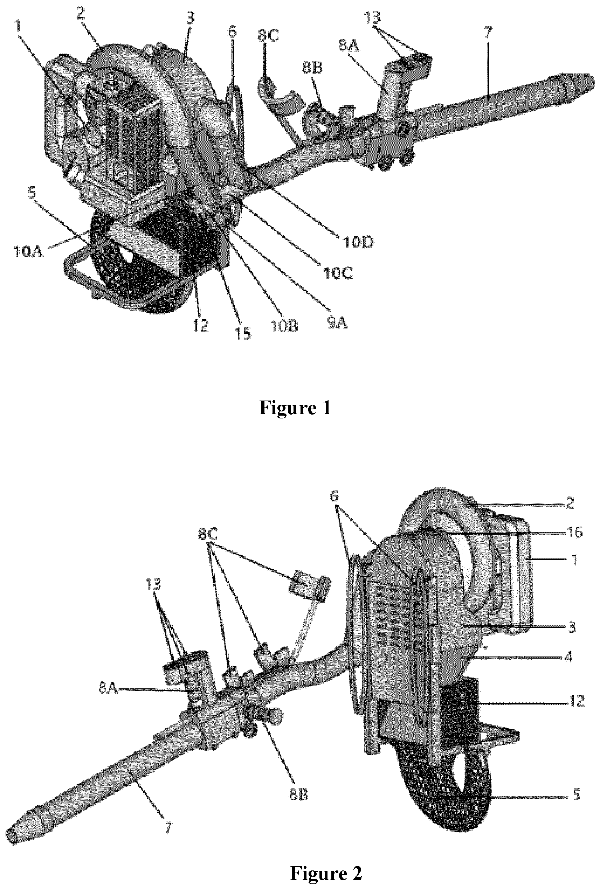

Figure 1 - Right rear oblique view of the preferred embodiment of the invention.
Figure 2 - Left anterior oblique view of the preferred embodiment of the invention.

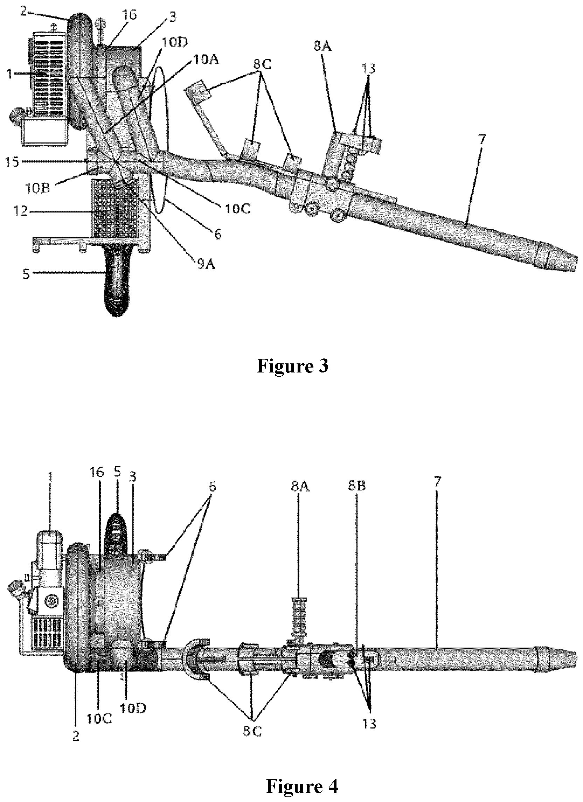

Figure 3 - Right side view of the preferred embodiment of the invention.
Figure 4 - Aerial view of the preferred embodiment of the invention.

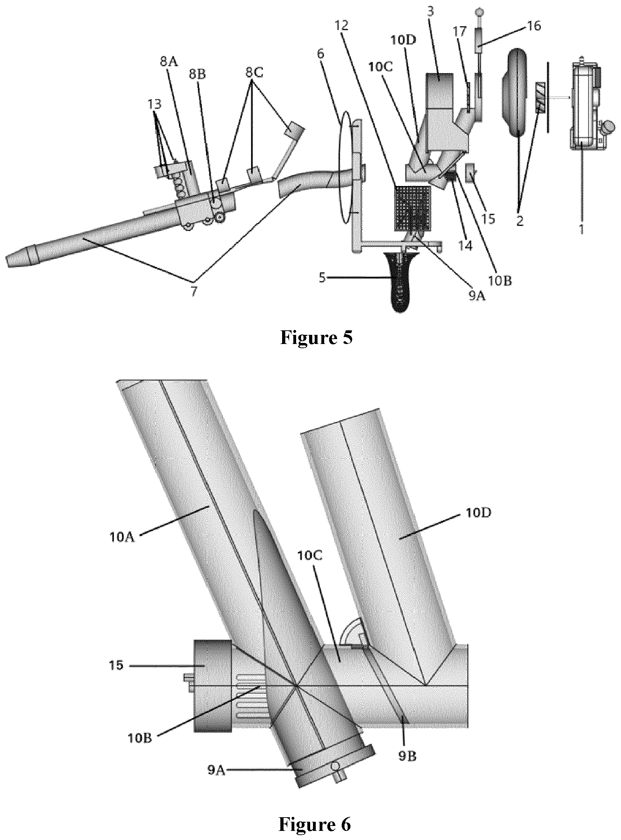

Figure 5 - Left side exploded view of the preferred embodiment of the invention.
Figure 6 - Detailed right side view of the diverting valve system and its conduits.

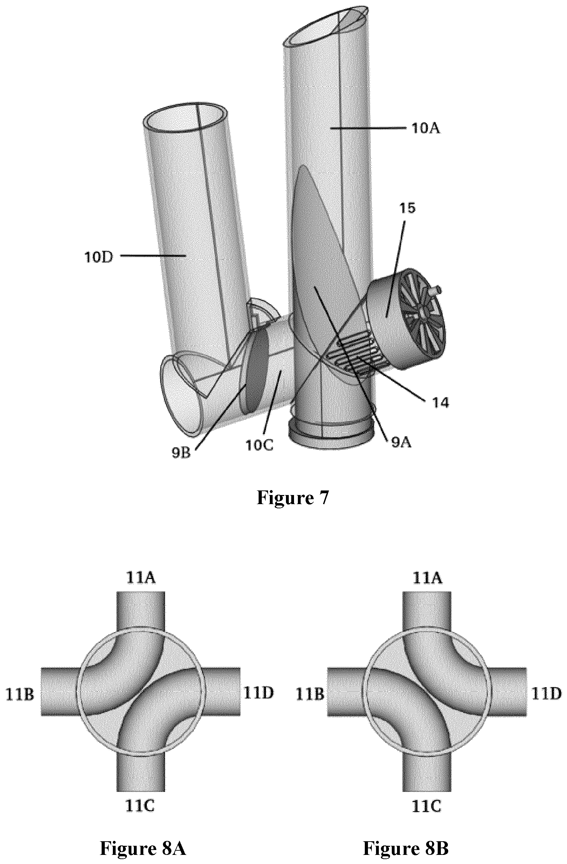

Figure 7 - Left rear oblique detailed view of the diverting valve system and its conduits.
Figure 8A and 8B - Schematic representation of the 4-way valve. Figure 8A represents the "suction mode" and Figure 8B the "blowing mode".

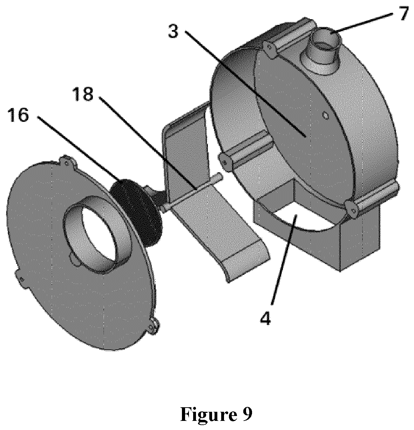

Figure 9 - Right rear oblique view of the exploded view of the first alternative repository with radial blade rotor.

### Preferred Embodiment of the Invention

In view of the aforementioned figures, and in accordance with the numbering adopted, several preferred embodiments of the invention can be seen in them, but not exclusive or limiting, which include the parts and elements described in detail below:
We start with a machine that is carried on the back like a backpack, for which reason it has straps (6) attached to a frame for this purpose. The first repository (3) is located just behind the back of the operator, with a turbine (2) (acting as a means of suction) and a motor (1) located below and in a vertical plane. This arrangement makes it possible to separate the hot parts (the motor) from the user. However, the distribution of these elements can be variable, and a second embodiment can be available where the engine (1) is at the front, followed by the turbine (2) behind, and finally behind the first repository (3). This distribution brings the center of gravity of the assembly closer to the user and makes the machine more comfortable to load. It is also possible to have a third embodiment where the engine (1) is above the turbine (2) and below the first repository (3). This distribution better prevents heavy materials from entering the turbine (2).

The first repository (3) is accessed laterally by a conduit (10D) that connects with the main suction conduit (7) and which introduces the products and materials aspirated into the first repository (3), without having to pass through the turbine (2). At the bottom of the first repository (3) there is a hatch (4) (which acts as a discharge system), which is closed when the accelerator is being activated. Therefore, all the suction force of the turbine (2) is transmitted to the main conduit (7). However, when the turbine (2) stops aspirating, the hatch (4) opens automatically and discharges its content into some screening ramps (12) located below.

The screening ramps (12) are opposite inclined planes, vertically inserted, which make the content that comes out of the first repository (3) follow a downward zigzag path. These screening ramps (12) are perforated in order to keep the desired fruits inside and small unwanted materials from slipping through the holes and falling out of the machine. At the end of the route through the screening ramps (12) the content ends up in a second repository (5) that is located below.

This second repository (5) is located in the lower part of the machine. It has an inlet opening located just below the screening ramps (12). It also has another exit opening for easy emptying of the content. It is made of a mesh with holes of a size specially designed to keep the desired fruits inside. Smaller unwanted materials, mainly small stones, are screened by falling outside.

The main suction conduit (7) has a final rigid part that is used by the user to be able to vacuum the products scattered on the floor, and a flexible part that allows it to be maneuvered. On the rigid part there is a control handle for the right hand (8A) with buttons (13), and a handle for the left hand (8B). These elements make it possible to manage the main conduit (7), turn the motor contact on or off (1), control the valves, systems and other elements of the machine, and regulate the speed of the turbine (2), which allows adjusting the suction power to the weight and size of the desired fruits, reducing as much as possible the collateral suction of other heavier unwanted materials. The machine also has a set of interchangeable nozzles that are inserted at the end of the main conduit (7) to adapt it to different conditions and desired fruits.

To finish the description of the preferred embodiment, the invention incorporates a practical recirculation system that converts the machine into a blower as well as a vacuum cleaner, through a system of two diverting valves (9A and 9B) inserted between some conduits (10A, 10B, 10C and 10D), which can invert the direction of the air flow inside some elements of the machine, in such a way that the main conduit (7) instead of vacuuming becomes blowing. The recirculation mechanism consists of varying the position of the first diverting valve (9A) located at the end of a conduit (10A) that collects the air flow coming out of the turbine (2), so that it directs it through a conduit (10C) towards the second diverter valve (9B), located between the main conduit (7) and a conduit (10D) that goes to the first repository (3), and in turn vary the position of said second diverter valve (9B) so that it directs that air flow to be expelled through the main conduit (7).

When the machine is in "suction mode" the first diverter valve (9A) directs the air flow out of the turbine (2) through a conduit (10B) that expels it directly outside. Likewise, the second diverting valve (9B) opens the passage between the main conduit (7) and a conduit (10D) that goes to the first repository (3), while closing the conduit (10C). In this way, the suction produced by the turbine (2) in the first repository (3) is transmitted directly through the main conduit (7), which performs a suction function.

When the machine is in "blowing mode", the first diverter valve (9A) varies its position and directs the air flow out of the turbine (2) through a conduit (10C) that communicates with the second diverter valve (9B), which in turn varies its position and directs this air outlet flow towards the main conduit (7), while closing the conduit (10D) that goes to the first repository (3). At the same time, the hatch (4) of the first repository (3) remains open, to become the air suction that reaches the turbine (2).

There may also be a second preferred embodiment of a recirculation system, which comprises a 4-way valve (11) located between the main conduit (7) and the first repository (3). From this 4-way recirculation valve (11) there are 4 conduits arranged in a cross on the same plane, which go to the following elements of the machine:
(11A) To the main conduit (7), which thanks to this 4-way recirculation valve (11) has a double function, suction and blowing.
(11B) At the first repository (3). In this conduit, the air flow is always in the direction from the 4-way recirculation valve (11) towards the first repository (3).
(11C) To an exhaust/suction conduit, which thanks to this 4-way recirculation valve (11) has both the expulsion and suction function.
(11D) To the exhaust of the turbine (2). In this conduit, the air flow always goes from the turbine (2) to the 4-way recirculation valve (11).

When the 4-way recirculation valve (11) is in the "suction mode" position, the channels (11A) communicate with (11B) on the one hand, and (11C) with (11D) on the other. In this way, the first repository (3) aspires air from the main conduit (7), and the turbine (2) expels air through the escape/suction conduit that works as an exhaust.

When the 4-way recirculation valve (11) is turned to the "blowing mode" position, the channels (11A) communicate with (11D) on the one hand, and (11B) with (11C) on the other. In this way, the first repository (3) draws air from the escape/suction conduit that works as suction, and the turbine (2) expels air through the main conduit (7).

## Claims

1. - Collection machine for individual use that includes:
• fastening means (6) suitable for fastening the machine on the back of a user,
• at least one main conduit (7),
• at least one suction means (2), configured to exert a suction force on the at least one main conduit (7),
• a first repository (3), located between the main conduit (7) and the inlet of at least one suction means (2), the first repository (3) being suitable for receiving products and materials aspired through the main conduit (7) due to the suction force of the at least one suction means (2),
• a discharge system (4) located in connection with the first repository (3), configured to block or allow the exit of the content of the first repository (3), and
• a second repository (5), independent of the first repository (3), configured to receive the content of the first repository (3) each time the discharge system (4) allows the content of the first repository (3) to exit.

2. Harvesting machine according to claim 1, in which the second repository (5) is made of a framework, mesh or perforated material that has holes of a shape, number and caliber specially designed to keep the desired fruits inside, and sift unwanted materials so that they fall out by themselves, and in some cases the second repository (5) may be of an interchangeable type and eligible according to the different desired fruits.

3. Harvesting machine according to any of the preceding claims, which additionally comprises a recirculation mode that reverses a direction of rotation of at least one suction means (2), so that it allows at least one main conduit (7) to expel air instead of breathing it in.

4. Harvesting machine according to any of claims 1 to 2, further comprising a recirculation system comprising:
• a first flow collection conduit (10A) located at the outlet of the at least one suction means (2),
• a second conduit (10B) that communicates with the outside,
• a third conduit (10C),
• a fourth conduit (10D) that communicates with the first repository (3),
• a first diverting valve (9A), located at the end of the first flow collection conduit (10A), configured to selectively communicate the first flow collection conduit (10A) with the second conduit (10B) that is directed to the outside, or well with the third conduit (10C), and
• a second diverting valve (9B) located at a point between the at least one main conduit (7) and the first repository (3), which also receives the arrival of the third conduit (10C) and which is configured to be arranged in a first position in which the at least one main conduit (7) communicates with the fourth conduit (10D), simultaneously closing the third conduit (10C), or in a second position in which the third conduit (10C) communicates with the at least one main conduit (7), while closing the fourth conduit (10D).

5. Harvesting machine according to any of claims 1 to 2, further comprising a recirculation system comprising a 4-way recirculation valve (11), which is connected to:
A. the at least one main conduit (7),
B. the first repository (3),
C. an additional exhaust or suction conduit, and
D. the outlet of the at least one means of suction (2);
the 4-way recirculation valve (11) being configured to be in a first suction position in which it connects the at least one main conduit (7) with the first repository (3) and the additional exhaust conduit with the outlet of the at least one suction means ; and configured to be arranged in a second blowing position in which it connects the at least one main conduit (7) with the outlet of the at least one suction means (2) and the first repository (3) with the additional suction conduit.

6. Harvesting machine according to any of the previous claims, comprising means for configuring a double mode of operation, manual or automatic, of the discharge system (4) and/or any of the valves (9A, 9B and 11).

7. Harvesting machine according to any of the preceding claims, which additionally comprises a mechanism configured to automatically control the discharge system of the first repository, which comprises at least one sensor and at least one actuator configured to unload the first repository based on of the information received from the at least one sensor.

8. Harvesting machine according to any of the preceding claims, which additionally comprises a set of interchangeable nozzles, suitable for being coupled at one end of at least one main conduit (7), the nozzles being suitable for adapting the use of the machine, to different conditions and desired fruits.

9. - Harvesting machine according to any of the previous claims, which additionally comprises an additional screening system (12) located after the first repository (3), such as a perforated ramp, which screens the content that comes out of this first repository (3) before entering the second repository (5), expelling out unwanted materials that are discarded.

10. Harvesting machine according to any of the preceding claims, in which the second repository (5) additionally comprises an outlet opening for emptying and final discharge of its contents.

11. Harvesting machine according to any of the preceding claims, further comprising drive controls arranged in adjustable ergonomic supports in the at least one main conduit (7).

12. Harvesting machine according to any of the preceding claims, further comprising a expel mechanism, such as a fan, located in an open space between the first repository (3) and the second repository (5).

13. Harvesting machine according to any of the preceding claims, which additionally comprises a winnowing nozzle (14) and an escape nozzle (15), arranged to collect the air that is expelled by the at least one suction means (2), from so that the fan nozzle (14) is arranged to direct the air flow to an open space between the first repository (3) and the second repository (5), and the escape nozzle (15) is arranged to direct the flow of air to the outside.

14. Harvesting machine according to any of claims 12 to 13, further comprising a system with a timer that allows the expel mechanism or at least one suction means to continue working automatically for a time after the discharge system of the first repository has been opened.

15. Harvesting machine according to any of the preceding claims, which additionally comprises a protection filter (16) located between the first repository (3) and the at least one suction means (2), which incorporates a cleaning mechanism comprising a freely rotating propeller (17), which includes blades with flexible filaments on their contact edge with the protection filter (16), so that the protection filter (16) is cleaned when the dragged propeller (17) rotates by the flow of the at least one suction means (2).

16. Harvesting machine according to any of the preceding claims, in which:
• The first repository (3) is in the shape of a solid of revolution and incorporates a radial blade rotor (18) inside, with three or more blades without gaps or openings, joined on an axis on which they rotate, so that, when turning, divides the interior of the first repository (3) into watertight compartments;
• The first repository (3) comprises openings that connect with the at least one suction means (2) and with the at least one main conduit (7), which are located so that they coincide in the same watertight compartment of those formed by the radial blade rotor (18); and
• The discharge system (4) is at least one discharge opening preferably located in the lower part of the first repository (3), and sufficiently separated from the other openings that connect with the at least one suction means (2) and with the at least one main conduit (7), in such a way that it is always in a different sealed compartment.
